# FASCICULE DE BREVET EUROPEEN

(11) **EP 1 285 747 B1**
(45) Date de publication et mention de la délivrance du brevet: **26.10.2005**
(21) Numéro de dépôt: 02292068.0
(22) Date de dépôt: 21.08.2002
(51) Int. Cl.: B32B 27/34, B32B 27/28

(54) **Structure laminée multicouche, en particulier pour le guipage de câbles électriques**
Mehrschichtige Struktur, insbesondere zur Umspinnung von elektrischen Kabeln
Multilayered structure, especially for the spinning of electrical cables

(30) Priorité: 21.08.2001 FR 0110950
(43) Date de publication de la demande: 26.02.2003
(73) Titulaire: COMPAGNIE PLASTIC OMNIUM, 69007 Lyon (FR)
(72) Inventeur: Yeung, Chor-Keung, 50600 Chaudenay (FR)
(74) Mandataire: Tanty, François

(56) Documents cités:
- FR-A- 1 556 405
- US-A- 3 616 177
- PATENT ABSTRACTS OF JAPAN vol. 1995, no. 08, 29 septembre 1995 (1995-09-29) & JP 07 125067 A (ATSUSATO KITAMURA), 16 mai 1995 (1995-05-16)

## Description

La présente invention est relative à un procédé pour réaliser une structure laminée multicouche utilisable en particulier pour le guipage de câbles électriques en vue d'assurer une isolation électrique.

Une application particulière est le câblage aéronautique où il est essentiel d'assurer une parfaite isolation électrique pour empêcher toute propagation d'un arc électrique.

On utilise depuis de nombreuses années dans ce type d'application des structures laminées multicouche mettant en oeuvre une couche de polyimide tel que le "Kapton" de la société E.I. du Pont de Nemours and Co. Ce matériau présente une bonne résistance thermique et de bonnes performances d'isolation électrique.

Un exemple d'une telle structure multicouche est décrit dans le brevet US 3 616 177 de cette même société. Cette structure comporte une couche de polyimide enduite sur au moins une de ses faces d'une couche de FEP (copolymère fluoré d'éthylène-propylène) et une couche de PTFE (polytétrafluoroéthylène) adhérisée à l'une desdites couches de FEP. La couche de PTFE est appliquée par enduction sous forme de dispersion aqueuse.

La présence de FEP permet d'éviter au polyimide sur lequel il est appliqué d'absorber de l'humidité extérieure susceptible d'entraîner sa dégradation par hydrolyse.

Un inconvénient d'une telle structure multicouche réside dans le fait que la couche de PTFE appliquée par enduction en dispersion aqueuse présente une épaisseur faible n'assurant qu'une faible résistance mécanique et une faible résistance à l'abrasion.

Or, pour réaliser le guipage avec des machines d'enrubannage modernes pouvant tourner à des vitesses de 2000 à 3000 tours/mn, il est nécessaire d'avoir une structure résistante mécaniquement à la cadence d'enrubannage et, donc, dont toutes les couches, en particulier la couche de PTFE, présentent une résistance mécanique suffisante pour résister à cette cadence sans que des défauts ne soient générés.

D'autres structures multicouche comportant une couche de polyimide enduite d'un copolymère fluoré d'éthylène-propylène sont décrites dans JP-A-7125067 et FR-A-1556405.

La présente invention a pour objet un procédé pour réaliser une structure laminée multicouche tel que défini dans la revendication 1.

Ainsi, dans le produit final obtenu, le PTFE est cru, et la réunion des rubans s'effectue à une température, dans la pratique, comprise entre 280 et 300° C, supérieure au point de fusion du FEP pour faire fondre celui-ci et permettre le collage du ou des rubans de PTFE sur le ruban de polyimide enduit de FEP.

Conformément à l'invention, la température, lors du chauffage avec application de pression, est inférieure à 340° C qui est la température de frittage (gélification) du PTFE.

Avantageusement selon l'invention, il est prévu de mettre en oeuvre un seul ruban de PTFE et la largeur du ruban de PTFE est supérieure à la largeur du ruban de polyimide enduit de FEP.

De préférence, le ruban de PTFE déborde latéralement d'un seul côté du ruban de polyimide enduit de FEP. Ceci permet lors de l'enrubannage d'assurer une isolation accrue de la couche de polyimide enduit de FEP, le bord dépassant du ruban de PTFE réalisant une barrière continue protégeant le polyimide d'une altération possible dans un environnement agressif.

Le PTFE utilisé selon l'invention est obtenu par extrusion lubrifiée de manière à présenter une structure fibrillée orientée dans le sens longitudinal du ruban formé.

On rappelle que le procédé d'extrusion lubrifiée consiste à mélanger de la poudre PTFE, additionnée le cas échéant d'une charge et/ou de pigments colorés, et un lubrifiant, pour réaliser une préforme compacte qui est soumise à un filage à la presse dans laquelle un piston refoule le PTFE, chargé ou non, à travers une filière de manière à former un profilé, tel qu'un ruban plat ou un jonc cylindrique, le lubrifiant étant ensuite éliminé généralement par chauffage.

Le ruban obtenu est en général calandré et peut, le cas échéant, être soumis à un étirage de dédensification, conférant au produit une porosité intra-fibrillaire.

Le ruban obtenu selon l'invention peut également être du type apte au marquage par laser, par exemple en ayant les structures décrites dans les brevets français 92 06427 et 95 03195 de la société déposante.

D'autres avantages et caractéristiques de la présente invention apparaîtront à la lecture de la description qui suit, d'exemples de réalisation en se référant au dessin annexé dans lequel :
- la figure 1 est une vue schématique d'une installation de fabrication pour mettre en oeuvre le procédé selon l'invention,
- la figure 2 représente schématiquement une structure obtenue dans le dispositif de la figure 1, enroulée pour former un isolant de conducteur électrique,
- la figure 3 illustre schématiquement un dispositif de coupe permettant de réaliser une structure selon un mode particulier de mise en oeuvre, et
- la figure 4 est une vue analogue à la figure 2 avec une structure obtenue à l'aide du dispositif de coupe de la figure 3.

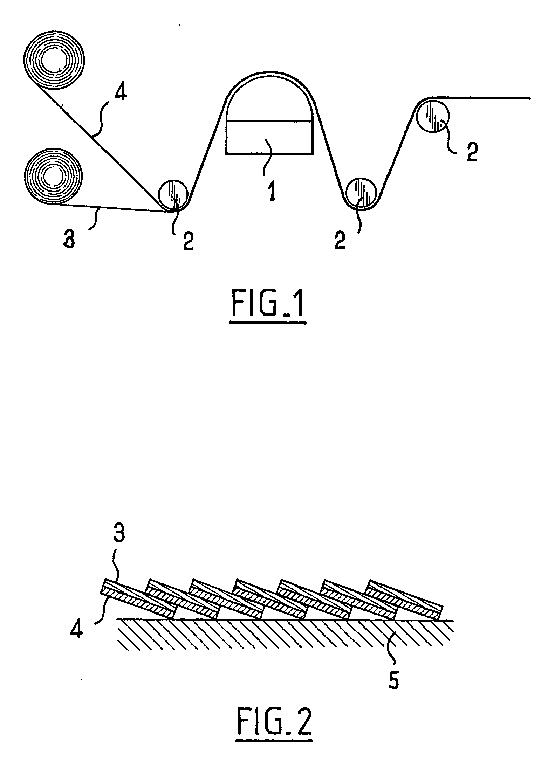

Le dispositif de la figure 1 comprend essentiellement un support régulé en température 1 et des rouleaux de guidage 2, sur lesquels on fait passer, de manière à les adhériser l'un l'autre par application de chaleur et de pression sur le support régulé en température, un ruban de PTFE 3 et un ruban 4 de polyimide enduit de FEP.

Dans un exemple particulier de réalisation, on utilise un ruban de PTFE cru d'une épaisseur de 30 µm et d'une largeur de 70 mm obtenu par extrusion lubrifiée.

Le ruban 4 de polyimide enduit de FEP est un ruban disponible sous la référence commerciale KAPTON 606 et présente également une largeur de 70 mm et une épaisseur de 30 µm.

La température du support est régulée à 310° C et la force appliquée pour adhériser les rubans 3 et 4 l'un à l'autre est de 30 g.

La contrainte mécanique mesurée du ruban 3 de PTFE est de 21,2 MPa dans la direction longitudinale (mesure selon la norme ASTM/D-882). La contrainte mécanique de la structure laminée multicouche obtenue dans la direction longitudinale est de 128 Mpa, ce qui permet, dans l'application comme isolation de câbles électriques, d'effectuer un guipage à grande vitesse en utilisant les machines d'enrubannage modernes qui présentent des vitesses de 2000 tours/mn, voire beaucoup plus.

La figure 2 illustre la structure multicouche obtenue dans le dispositif de la figure 1 enrubannée sur un conducteur électrique 5.

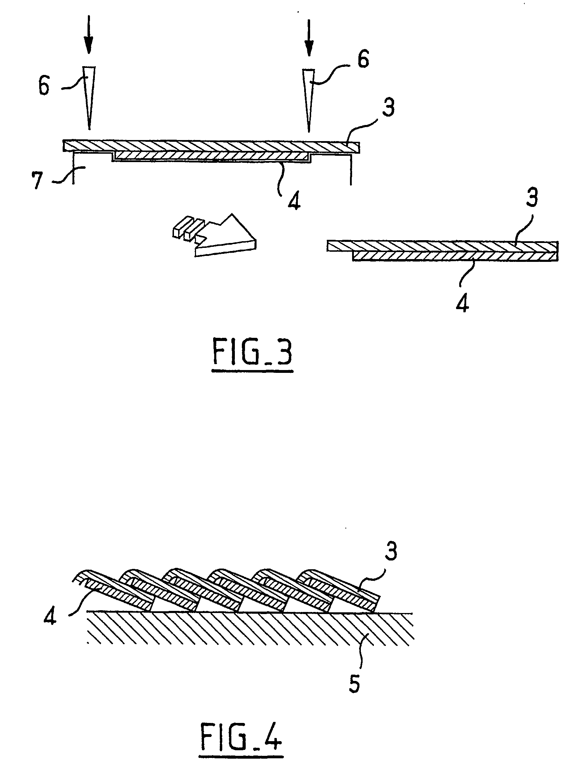

On a illustré à la figure 3 la mise en oeuvre d'une variante de réalisation de structure laminée multicouche selon l'invention dans laquelle la largeur du ruban de PTFE dans la structure finale est plus grande que celle du ruban de polyimide enduit de FEP.

On sectionne à cet effet, à l'aide de lames coupantes, schématisées en 6, une structure obtenue dans le dispositif de la figure 1 et dans laquelle, par exemple, le ruban de PTFE 3 déborde latéralement des deux côtés comme illustré, du ruban 4 de polyimide enduit de FEP en utilisant une enclume 7 comportant une gorge dimensionnée pour permettre le passage du ruban 4.

Dans l'exemple illustré, on voit qu'après sectionnement le ruban de PTFE 3 ne déborde que d'un seul côté du ruban de polyimide enduit de FEP ce qui permet de réaliser, lors du guipage, la disposition illustrée à la figure 4 où l'on voit que le ruban de PTFE 3 recouvre entièrement le ruban de polyimide enduit de FEP 4 et protège totalement celui-ci.

A titre d'exemple, on a réalisé une structure laminée dans laquelle les rubans de PTFE et de polyimide enduit de FEP présentaient les caractéristiques de ceux mentionnés ci-dessus, la largeur du ruban 4 de polyimide enduit de FEP étant de 57 mm.

Cette structure laminée présente sensiblement les mêmes caractéristiques de résistance en traction que celle de l'exemple décrit ci-dessus.

On a également mis en oeuvre l'invention avec un ruban de PTFE dédensifié par étirage après son obtention par extrusion lubrifiée, le ruban de PTFE présentant une densité de 0,7.

Les caractéristiques mécaniques de la structure laminée obtenue sont du même ordre que celles de l'exemple décrit précédemment, permettant également une utilisation dans des machines d'enrubannage à grande vitesse.

Des essais effectués avec des films de PTFE chargés, pigmentés et présentant une structure apte au marquage par faisceau laser, notamment laser aux UV, ont démontré des caractéristiques mécaniques comparables.

Bien que l'invention ait été décrite en liaison avec des exemples de mise en oeuvre particuliers, il est bien évident qu'elle n'y est nullement limitée et qu'on peut lui apporter différentes variantes et modifications sans pour autant sortir de son cadre tel que défini par les revendications ci-après.

## Revendications

1. Procédé pour réaliser une structure laminée multicouche comportant une couche de polyimide enduite sur au moins une de ses faces de FEP (copolymère fluoré d'éthylène - propylène) et au moins une couche de PTFE (polytétrafluoroéthylène) adhérisée à ladite couche de polyimide enduite de FEP, **caractérisée par le fait que** l'on réunit à chaud, avec application de pression, au moins un ruban (3) de PTFE cru obtenu par extrusion lubrifiée et un ruban de polyimide enduit de FEP (4) à une température inférieure à la température de frittage du PTFE.

2. Procédé selon la revendication 1, **caractérisé par le fait que** l'on utilise un ruban de PTFE (3) dont la largeur est supérieure à la largeur du ruban de polyimide enduit de FEP (4).

3. Procédé selon la revendication 2, **caractérisée par le fait que** l'on réunit les rubans de manière que le ruban de PTFE (3) déborde latéralement d'un seul côté du ruban de polyimide enduit de FEP (4).

## Patentansprüche

1. Verfahren zur Herstellung einer laminierten Mehrlagenstruktur umfassend eine Polyimidschicht, deren wenigstens eine Seite mit FEP (fluoriertem Ethylen-Propylen-Copolymer) überzogen ist, und wenigstens eine Schicht aus PTFE (Polytetrafluorethylen), welche mit der mit FEP überzogenen Polyimidschicht haftend verbunden ist, **dadurch gekennzeichnet, dass** wenigstens ein Band (3) aus rohem, durch geschmierte Extrusion erhaltenem PTFE und ein mit FEP überzogenes Polyimidband (4) unter Anwendung von Druck bei einer Temperatur, die unter der Sintertemperatur des PTFE liegt, warm zusammengefügt werden.

2. Verfahren nach Anspruch 1, **dadurch gekennzeichnet, dass** ein PTFE-Band (3) verwendet wird, dessen Breite größer ist als die Breite des mit FEP überzogenen Polyimidbandes (4).

3. Verfahren nach Anspruch 2, **dadurch gekennzeichnet, dass** die Bänder derart zusammengefügt werden, dass das PTFE-Band (3) auf nur einer Seite des mit FEP überzogenen Polyimidbandes (4) seitlich übersteht.

## Claims

1. A method for producing a multilayer laminated structure comprising a polyimide layer coated on at least one of its faces in FEP (fluorinated ethylene propylene copolymer), and at least one layer of PTFE bonded to said FEP-coated polyimide layer, **characterized in that**, at least one tape (3) made of green PTFE obtained by lubricated extrusion and a FEP-coated polyimide tape (4) are united while hot with pressure being applied at a temperature that is lower than the sintering temperature of PTFE.

2. A method according to claim 1, **characterized in that** a PTFE tape (3) is used, the width of which is greater than the width of the FEP-coated polyimide tape (4).

3. A method according to claim 2, **characterized in that** the tapes are united in such a manner that the PTFE tape (3) projects laterally from one side only of the FEP-coated polyimide tape (4).
